## Europäisches Patentamt
## European Patent Office
## Office européen des brevets

(19)

(11) Publication number: **0 201 316**
A2

(12) # EUROPEAN PATENT APPLICATION

(21) Application number: **86303431.0**

(22) Date of filing: **06.05.86**

(51) Int. Cl.⁴: **F 42 B 15/033**

(30) Priority: **07.05.85 US 731809**

(43) Date of publication of application: **12.11.86**
Bulletin **86/46**

(84) Designated Contracting States: **DE FR GB IT SE**

(71) Applicant: **THE GARRETT CORPORATION,**
**9851-9951 Sepulveda Boulevard P.O. Box 92248, Los**
**Angeles, California 90009 (US)**

(72) Inventor: **Sutton, Trevor George, 5616 South Pirates**
**Cove Tempe, Maricopa Arizona 85283 (US)**

(74) Representative: **Rees, David Christopher et al, Kilburn &**
**Strode 30 John Street, London WC1N 2DD (GB)**

(54) **Apparatus for control of attitude of automotive vehicle.**

(57) Attitude control apparatus (18, 20) for an automotive vehicle (10) in which motive fluid is supplied to attitude control nozzles (22, 24). The nozzles (22, 24) are arranged in two pairs, each pair consisting of two oppositely directed nozzles through one or other of which the fluid is selectively expelled, whereby substantially simultaneous operation of one nozzle from each pair in opposite directions effects an attitude change about the roll axis (26) while substantially simultaneous operation of one nozzle from each pair in the same direction effects an attitude change about one of the yaw axis and the pitch axis.

Apparatus for Control of Attitude of Automotive Vehicle

The present invention relates to controlling the attitude of an automotive vehicle for example, an unrestrained flying vehicle.

More particularly, the present invention is concerned with jet reaction thrust control of attitude (pitch, yaw and roll) of a moving body, for example, jet reaction thrust control of a vehicle in which successively oppositely directed and selectively variable impulse bits are applied to the vehicle.

In such a case, the vehicle may comprise a source of pressurised motive gas connected to pairs of attitude control nozzles which are oppositely disposed with respect to a control axis, and bistable valving controlling the flow of the motive gas to the nozzles. The magnitude of the impulse bits applied in such a vehicle is the time integral of thrust, and duration of thrust for each pulse. The oppositely directed thrust pulses from the attitude control nozzles are changed stepwise between near-zero, and a determined level. Because the impulse bits are applied to the vehicle in successively opposite directions, the vehicle is forced into an attitude oscillation. This attitude oscillation is known to those in the art as a limit cycle, and the control method is known as a Pulse Duration Modulation (PDM) or bang-bang system. In applications where the impulse bits are sufficiently small in comparison to the vehicle mass and are applied at a frequency above the oscillation threshold frequency of the vehicle, the latter responds only to the net average force without oscillation.

A conventional PDM vehicle control system using a bistable valve structure is disclosed in U.S. Patent No. 3,278,140 in the name of K.C. Evans. According to the teaching of Evans, one of three bistable valves is used to control each one of the pitch, yaw, and roll of the vehicle. Each of the bistable valves comprises a body defining a nozzle directing a motive gas stream to a splitter which defines a bifurcated flow path. Control ports are located on each side of the fluid stream as it travels toward the splitter. The chamber through which the fluid stream travels is configured to cause a vacuum in the control ports in response to flow of the fluid stream. Consequently, closing one of the control ports to atmosphere while leaving the opposite port open causes rarification switching of the fluid stream toward the closed port.

With the control system taught by Evans, a vehicle must have at least three bistable valve apparatus to control the attitude of the vehicle about each of the pitch, yaw, and roll axes. Consequently, the control apparatus may represent a considerable portion of the total weight of a small vehicle. When it is desired to make a vehicle which is man-portable, or which can be carried upon some other small, light-weight vehicle, the total weight of the vehicle is a critical design parameter. In such circumstances, the weight of the Evans control device may be a prohibitively large proportion of the permissible vehicle weight. Alternatively, if the Evans control system is used nevertheless, the performance of the vehicle may fall short of that required.

Another aspect of the Evans control system which may not be entirely satisfactory is the use of rarification switching of the fluid stream between its two positions within the bistable valve. Such a switching arrangement can result in the PDM characteristic of the control system being variable and dependent upon the atmospheric pressure level. As a result, a vehicle which operates satisfactorily near sea level may have an unsatisfactorily slow PDM rate when used at a higher altitude.

Another disadvantage of the Evans system when applied to small vehicles is the use of three separate motive fluid streams to effect control about the three control axes. Because each of the fluid streams must be flowing so long as control of the vehicle is to be effected, a considerable portion of vehicle total energy may be dissipated by the three streams in combination.

In view of the shortcomings of conventional control schemes when applied to small vehicles, it is an object of the present invention to provide an attitude control system for small light-weight vehicles which is comparatively light in weight.

It is a further object of the present invention to provide an attitude control system which requires a smaller expenditure of energy from the vehicle for purposes of attitude control.

Another object of the present invention is to provide an attitude control system for small vehicles which is not influenced by variations in altitude or atmospheric pressure.

According to the invention, there is provided apparatus for controlling the attitude of an automotive vehicle, comprising a source of pressurised motive fluid connected to attitude control nozzles spaced from the roll axis of the vehicle, characterised in that the nozzles are arranged in two pairs, each pair consisting of two oppositely directed nozzles through one or other of which the fluid is selectively expelled, whereby substantially simultaneous operation of one nozzle from each pair in opposite directions effects an attitude change about the roll axis while substantially simultaneous operation of one nozzle from each pair in the same direction effects an attitude change about one of the yaw axis and the pitch axis.

Preferably, each pair of nozzles is associated with bistable valve means for selectively directing discharge of the motive fluid from one of the two nozzles. Preferably, the two pairs of nozzles are substantially equally spaced radially outwardly of the roll axis and are spaced longitudinally from the centre of gravity of the automotive vehicle. Conveniently, the two pairs of nozzles are diametrically disposed with respect to the roll axis.

In a preferred form, therefore, the present invention provides control apparatus for a small vehicle comprising a source of pressurised motive fluid, a single pair of conduits respectively communicating the motive fluid with two oppositely directed pairs of nozzles, each oppositely directed pair of nozzles being spaced radially outwardly of the roll axis of the vehicle and being disposed generally perpendicularly thereto, and a single pair of bistable PDM valve means interposed respectively in the pair of conduits for controlling motive fluid flow from selected ones of the pairs of nozzles.

Preferably, the oppositely directed nozzles of each pair are arranged to direct the motive fluid in a direction substantially perpendicular to a diametral line passing generally centrally through the pair of nozzles.

Preferably, apparatus includes a control system for each pair of nozzles, each system comprising an inlet connecting the pressurised fluid to a power jet nozzle for forming a power jet of motive fluid, a pair of receivers arranged to receive the power jet of motive fluid, deflecting means for selectively directing the power jet of motive fluid to a selected one of the said pairs of receivers, and means connecting the pair of receivers individually with respective ones of the nozzles in order to discharge motive fluid therefrom. The deflecting means may comprise a deflecting member movable laterally of the power jet of motive fluid between the power jet nozzle and the pair of receivers.

Preferably, the apparatus includes means for selectively moving the defecting member between a first position in which substantially all of the power jet of motive fluid is received by a selected one of the pair of receivers, and a second position in which substantially all of the power jet of motive fluid is received by the other receiver. The moving means is preferably an electrical solenoid.

The deflecting means may include a pair of control ports disposed on opposite sides of the power jet nozzle between the power jet nozzle and the pair of receivers for receiving pressurised motive fluid and discharging the fluid with respect to the power jet of motive fluid to deflect the latter relative to the pair of receivers.

Preferably, therefore, each bistable valve means includes a branch conduit communicating pressurised motive fluid to a control port located between the nozzle and a splitter of the bistable valve means, and pilot valve means for opening and closing motive fluid flow in the branch conduit.

The invention also extends to an automotive vehicle including a source of pressurised motive gas, a nozzle for discharging the gas for jet reaction propulsion and attitude control apparatus as described above.

The invention may therefore extend to an automotive vehicle including a source of pressurised motive gas; means communicating the pressurised motive gas to ambient for jet reaction propulsion of the vehicle; and a pair of attitude control means also communicating the pressurised motive gas to ambient which, when acting in substantially simultaneous cooperation, effect an attitude change of the vehicle in one of a pitch and yaw axes, and when acting in substantially simultaneous opposition effect an attitude change of the vehicle about a longitudinal roll axis.

According to a prefered aspect of the present invention, there is provided a method of controlling the attitude of an automotive vehicle in each of a roll, pitch, and yaw axis comprising the steps of providing thrust reaction means for controlling the attitude of the vehicle only in the roll axis and one of the pitch and yaw axis, controlling the attitude of the vehicle in the roll axis by utilisation of the said thrust reaction means, controlling the attitude of the vehicle in the pitch or yaw axis by utilisation of said thrust reaction means, and controlling the attitude of the vehicle in the other of the pitch and yaw axis by:

first using the thrust reaction means to roll the vehicle through substantially ninety degrees, and thereafter using the thrust reaction means to effect control of vehicle attitude in the other of the pitch and yaw axis.

According to another preferred aspect of the present invention, there is provided a method of controlling the flight direction of a free flying automotive vehicle comprising the steps of disposing on diametrically opposite sides of a roll axis of the vehicle respective ones of a pair of attitude control assemblies each substantially equally radially spaced from the roll axis, continuously flowing pressurised motive fluid from the control assemblies along respective parallel action lines each substantially perpendicular both to the roll axis and to a diametral line connecting the control assemblies, flowing the motive fluid substantially simultaneously in a single direction from the diametrically opposed control assemblies along the action lines to effect a pitch or yaw attitude change of the vehicle, and flowing the motive fluid substantially simultaneously in opposite directions from the diametrically opposed control assemblies along the action lines to effect a roll attitude change of the vehicle.

Thus, by flowing the motive fluid substantially simultaneously in opposite directions from the diametrically opposed control assemblies along the action lines to effect roll attitude change of substantially ninety degrees, it is possibe thereafter to effect an attitude change in the other of the pitch or yaw axis by use of the diametrically opposed control assemblies.

The invention also extends to a moving free body having an axis of propagation defining a roll axis for the body, mutually perpendicular pitch and yaw axis perpendicular to the roll axis, and only singular control means for selectively effecting an attitude change of the vehicle in the roll axis and in one of the pitch and yaw axes, in which, preferably, the singular control means comprises a diametrically opposed pair of thrust reaction assemblies each equally spaced radially outwardly of the roll axis, the assemblies comprising means for selelctively discharging motive fluid substantially simultaneously in a single direction parallel to one of the pitch and yaw axes to effect an attitude change of the body in the one axis, and for alternatively discharging motive fluid substantially simultaneously in opposite directions parallel to the one of the pitch and yaw axes to effect a roll attitude change of the body.

According to a still further aspect of the invention there is provided an automotive vehicle comprising an elongate body defining a forward end, an aft end, and an axis of propagation; means for forwardly propelling the vehicle along the axis of propagation; a source of pressurised motive fluid, and attitude control means for effecting movement of the vehicle about the axis of propagation (roll) and about one of a pitch and a yaw axis perpendicular to the axis of propagation; the attitude control means comprising only first and second continuously open flow path openings from the motive fluid source into respective pairs of oppositely disposed nozzles for jet reaction discharge of the motive fluid to ambient, the pairs of oppositely disposed nozzles being diametrically opposed with respect to the axis of propagation and equally spaced radially outwardly thereof and lying substantially at right angles both to the latter axis and to a radial line passing centrally through the pairs of nozzles, respective first and second two-way valve means interposed in the first and second flow paths for discharging the motive fluid from selected ones of the respective first and second pair of oppositely directed nozzle means.

Preferably, the first and second flow paths are disposed on diametrically opposite sides of the propulsion means.

An advantage of the present invention is a comparative weight reduction in a small vehicle by the elimination of one of the three sets of control valving and nozzles conventionally required. A further advantage over conventional vehicle control systems is a reduction by about one-third of the amount of energy required for vehicle attitude control. While the conventional control systems used three motive fluid streams each vented through oppositely directed control nozzles by bistable PDM valving to effect control in the pitch, yaw, and roll axis, the present invention requires only two motive fluid streams.

Still another advantage of the present invention over conventional bistable PDM control valving is the preferred use of positive pressure switching of the fluid stream between the two oppositely directed nozzles. Because the control system according to the invention uses positive pressure switching rather than conventional rarification switching, altitude changes may have no affect upon the PDM characteristic of the control system.

The invention may be carried into practice in various ways and one embodiment will now be described by way of example with reference to the accompanying drawings in which:-

Figures 1 and 1a respectively present side and aft end views of an automotive vehicle embodying the present invention;

Figure 2 schematically depicts the bistable valve device of the present invention; and

Figure 3 in its four subparts 3a-d depicts the automotive vehicle control method of the present invention.

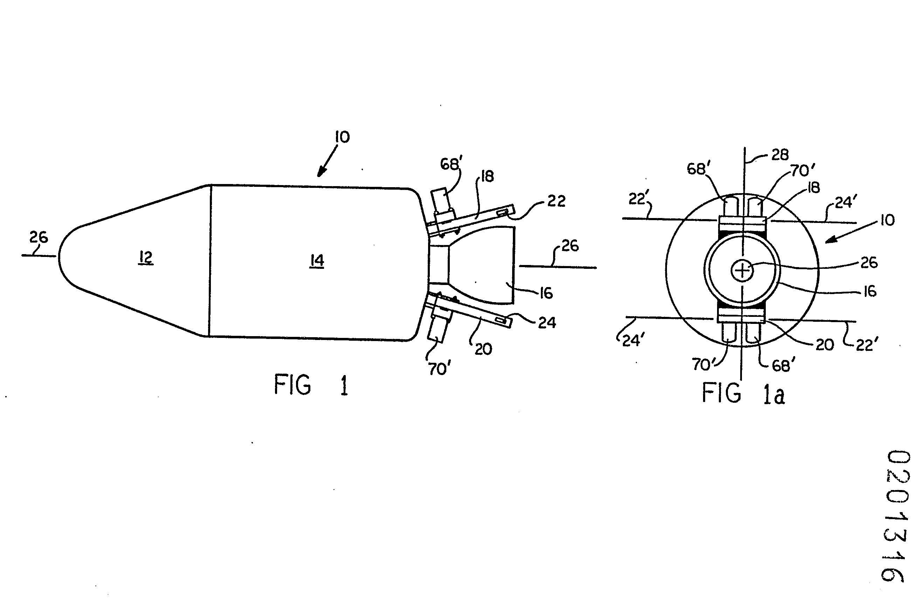

Figure 1 shows a rocket-propelled automotive vehicle 10 having a forward portion 12 housing a payload for the vehicle, such as an instrumentation and guidance package. The vehicle 10 also includes an aft rocket propulsion portion 14 housing a conventional solid propellent fuel grain. The propulsion portion 14 includes an exhaust nozzle exit cone 16 communicating with the fuel grain and extending rearwardly of the vehicle. The cone 16 opens rearwardly to the atmosphere for expelling a high velocity jet of motive fluid to propel the vehicle 10 forwards. Flanking the exit cone 16 on opposite sides thereof are a single pair of attitude control apparatus 18 and 20. The apparatus 18, 20 are substantially identical, and each communicates also with the fuel grain for selectively expelling jets of motive fluid in a direction perpendicular to the direction of forward movement of the vehicle 10 via opposed nozzle openings 22 and 24 in each apparatus.

As can be seen from Figure 1a, the apparatus 18, 20 are each equally spaced radially outwardly of the roll axis 26 of the vehicle 10. Consequently, the nozzles 22 and 24 of each apparatus 18, 20 expel motive fluid along mutually parallel respective action lines 22', 24' which are spaced radially outwardly from the roll axis 26, and are disposed substantially perpendicularly to a radial line 28 passing centrally through the apparatus 18, 20. Also, the apparatus 18, 20 are disposed near the aft end of the vehicle 10 so that they are behind the vehicle centre of gravity and therefore define a lever arm relative thereto for pitch and yaw attitude change of vehicle 10.

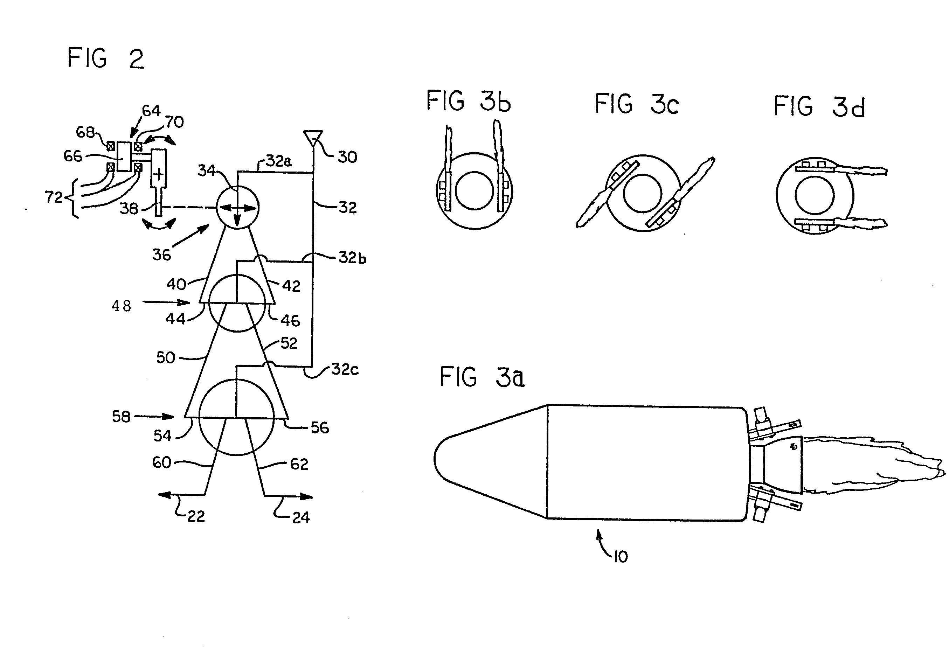

Turning now to Figure 2, the apparatus 18, 20 each include a continuously open inlet port 30 receiving pressurised motive fluid from the fuel grain of the propulsion portion 14. The inlet port 30 communicates with a branched passage 32 having a first branch 32a communicating with a power nozzle 34 of a bistable fluidic amplifier 36. The amplifier 36 includes a deflection member 38 movably disposed in the interaction region of the amplifier to control deflection of fluid pressure into one or the other of a pair of outlet passages 40, 42. The passages 40, 42 communicate respectively with the control ports 44, 46 of a downstream second bistable fluidic amplifier 48. A second passage branch 32b from the passage 32 communicates with the power jet port of the second amplifier 48.

Similarly, the second amplifier 48 includes outlet passages 50, 52 which communicate with the control ports 54, 56 of a third bistable fluidic output amplifier 58. A third branch passage 32c communicates with the power jet of the output amplifier 58. The outlet passages 60, 62 of the output amplifier 58 communicate with the nozzle openings 22 and 24, respectively.

The apparatus 18, 20 each include a double-coil solenoid 64, including an armature 66 operatively connected to the deflection member 38, and a pair of opposed solenoid coils 68, 70. The outer housings of the solenoid coils 68, 70 are shown in Figures 1 and 1a under reference numerals 68', 70'.

During rocket-propelled flight of the vehicle 10, the fuel grain produces pressurised motive fluid which is expelled from the exhaust nozzle exit cone 16, as well as being continuously expelled from the attitude control apparatus 18, 20, via selected ones of the nozzle openings 22, 24. It will be seen from Figure 2 that all the motive fluid received by the apparatus 18, 20 flows out via the nozzle openings 22, 24. If the deflection member 38 is positioned by energistion of one of the solenoid coils 68, 70 to produce an output in the passage 40, then the power jet of the second amplfier 48 is switched to produce an output in the passage 52, and the output of the output amplifier 58 appears at the nozzle opening 22.

Conversely, energisation of the other of the solenoid coils 68, 70 switches the outputs to the passages 42 and 50, and to the other nozzle opening 24. Thus, the motive fluid flow through the apparatus 18, 20 flows out substantially all from the nozzle opening 22, or substantially all from the nozzle opening 24, in dependence upon the selective individual energisation of the solenoid coils 68, 70.

Because the apparatus 18, 20 employ fluidic bistable pressure switching using motive fluid pressure to effect the switching, the switching rate may be very rapid and is not substantially affected by altitude changes. The solenoid coils 68, 70 are controlled by PDM electrical signals supplied via conductors 72 originating with a guidance device (not shown) in vehicle portion 12.

Figure 3 shows the vehicle 10 as though in flight with a plume of motive fluid ejecting from the exhaust nozzle exit cone 16 (Figure 3a). Now, if the roll attitude of the vehicle 10 is as shown in Figure 3B, and an upward pitch of the vehicle is commanded, the apparatus 18, 20 are PDM controlled to effect a time-integral upward reaction simultaneously from each apparatus. Thus, the aft end of vehicle 10 is forced downward, raising the forward end, and causing no roll movement of the vehicle. Accordingly, upward and downward pitch attitude control may be effected with the vehicle 10 in a roll attitude as shown in Figure 3b. On the other hand, if the vehicle 10 is in a roll attitude as shown in Figure 3b, and a change in the yaw attitude is required, the PDM signals to the apparatus 18, 20 effect a time-integral reaction (Figure 3c) to roll vehicle 10 to the Figure 3d roll attitude. The yaw attitude change is then effected, for example, a rightward deflection of the vehicle flight course as shown in Figure 3d.

Summarising therefore, it will be seen that the apparatus 18, 20 are disposed radially outwardly spaced from the centre of gravity of vehicle 10 with respect to the roll axis, and longitudinally spaced from the centre of gravity with respect to the pitch and yaw axes. Therefore, by simultaneous PDM operation of the apparatus 18, 20 to effect time-integral thrust reaction in a single direction, a pitch or yaw attitude change of the vehicle 10 is effected.  Similarly, by simultaneously PDM operation of the apparatus 18, 20 to effect time-integral thrust reaction each in an opposite direction, a roll attitude change of the vehicle 10 is effected.

Those skilled in the art will recognise that while pitch and yaw have been used in this specification in the conventional sense of vertical and horizontal direction changes, respectively, this should not be considered limiting on the invention.  In other words, the control axes selected may be skewed with respect to the earth and are not necessarily disposed at ninety degrees to each other.  This will depend upon the particular objective for the vehicle 10.  However, a salient feature of the present invention is attitude control of a vehicle with respect to control axes including a roll axis and numbering more than two, while using only two motive fluid control streams selectively PDM controlled in opposite directions of discharge, and effecting roll attitude change of the vehicle in preparation for an attitude change in the pitch or yaw sense.

While the present preferred embodiment depicts attitude thrust reaction apparatus 18, 20 disposed aft of the vehicle centre of gravity, they could just as effectively be disposed forward of or at the vehicle centre of gravity.

Claims:

1.    Apparatus (18,20) for controlling the attitude of an automotive vehicle (10), comprising a source (14) of pressurised motive fluid connected to attitude control nozzles (22,24) spaced from the roll axis (26) of the vehicle (10), characterised in that the nozzles (22,24) are arranged in two pairs, each pair consisting of two oppositely directed nozzles through one or other of which the fluid is selectively expelled, whereby substantially simultaneous operation of one nozzle from each pair in opposite directions effects on an attitude change about the roll axis (26) while substantially simultaneous operation of one nozzle from each pair in the same direction effects an attitude change about one of the yaw axis and the pitch axis.

2.    Apparatus as claimed in claim 1 characterised in that each pair of nozzles is associated with bistable valve means (36) for selectively directing discharge of the motive fluid from one of the two nozzles.

3.    Apparatus as claimed in claim 1 or claim 2 characterised in that the two pairs of nozzles are substantially equally spaced radially outwardly of the roll axis (26) and are spaced longitudinally from the centre of gravity of the automotive vehicle.

4.    Apparatus as claimed in any preceding claim characterised in that the oppositely directed nozzles of each pair are arranged to direct the motive fluid in a direction substantially perpendicular to a diametral line passing generally centrally through the pair of nozzles.

5. Apparatus as claimed in any preceding claim characterised by a control system for each pair of nozzles, each system comprising an inlet (30) connecting the pressurised fluid to a power jet nozzle (34) for forming a power jet of motive fluid, a pair of receivers (40,42) arranged to receive the power jet of motive fluid, deflecting means (38,64) for selectively directing the power jet of motive fluid to a selected one of the said pair of receivers (40,42), and means connecting the pair of receivers individually with respective ones of the nozzles (22,24) in order to discharge motive fluid therefrom.

6. Apparatus as claimed in claim 5 characterised in that the deflecting means comprising a deflecting member (38) movable laterally of the power jet of motive fluid between the power jet nozzle (34) and the pair of receivers (40,42).

7. Apparatus as claimed in claim 6 characterised by means (64) for selectively moving the deflecting member (38) between a first position in which substantially all of the power jet of motive fluid is received by a selected one of the pair of receivers (40,42), and a second position in which substantially all of the power jet of motive fluid is received by the other receiver.

8. Apparatus as claimed in claim 7 characterised in that the moving means comprises an electrical solenoid (64).

0201316

9. Apparatus as claimed in any of claims 5 to 8 characterised in that the deflecting means includes a pair of control ports (44,46) disposed on opposite sides of the power jet nozzle (34) between the power jet nozzle (34) and the pair of receivers (40,42) for receiving pressurised motive fluid and discharging the fluid with respect to the power jet of motive fluid to deflect the latter relative to the pair of receivers (40,42).

10. An automotive vehicle (10) including a source of pressurised motive gas (14) and a nozzle (16) for discharging the gas for jet reaction propulsion of the vehicle, characterised by attitude control apparatus as claimed in any preceding claim.

FIG 1

FIG 1a

0201316

FIG 2

FIG 3b

FIG 3c

FIG 3d

FIG 3a